# EUROPEAN PATENT SPECIFICATION

(11) **EP 2 340 144 B1**
(45) Date of publication and mention of the grant of the patent: **27.08.2014**
(21) Application number: 09778218.9
(22) Date of filing: 31.08.2009
(51) Int. Cl.: B23Q 1/54, B23Q 9/00

(54) **MACHINE TOOL**
WERKZEUGMASCHINE
MACHINE-OUTIL

(30) Priority: 13.10.2008 GB 0818635; 16.02.2009 GB 0902421
(43) Date of publication of application: 06.07.2011
(73) Proprietor: Rolls-Royce Plc, London Greater London SW1E 6AT (GB)
(72) Inventor: ALLEN, John, Marcus, Nottingham NG9 2PU (GB); AXINTE, Dragos, Aurelian, Nottingham NG9 5HJ (GB); ANDERSON, Ralph, Graham, Derby DE24 8BJ (GB); FORTUNE, James, Robert, Derby DE24 8BJ (GB); ROBERTS, Paul, Richard, Derby DE24 8BJ (GB)
(74) Representative: Barcock, Ruth Anita
(86) International application number: PCT/EP2009/006289
(87) International publication number: WO 2010/043284

(56) References cited:
- DE-U1-202005 011 430
- FR-A- 2 607 093
- FR-A- 2 809 034
- US-A- 5 388 935

## Description

The present invention relates to a machine tool.

Parallel kinematic machine tools using hexapod architectures are proposed in US patent nos. 5354158 and 5388935. US patent no. 7261502 proposes an alternative parallel kinematic architecture in which pairs of hinged arms are used to move a tool holder in two orthogonal directions, a linear slide being used to position a workpiece in the third orthogonal direction.

However, while such machine tools can provide advantages over more conventional serial kinematic machine tools, particularly in relation to accuracy of tool positioning, those developed to date have tended to be relatively large and have a substantial base platform to which the lower ends of the extensible element are attached to provide a fixed positional reference. The workpiece is then mounted on the base platform which makes them unsuitable for in-situ machining of workpieces that are, for example, larger than the machine tool.

FR-2809034 discloses a machine tool mounted above a base platform by a plurality of jacks to form a hexapod architecture. Articulated connections connect the jacks to the machine tool and the base respectively. The machine tool is moved and orientated by controlling the jacks relative to the base. The base has a central opening through which operations are performed by the machine tool, the opening restricting movement of the machine tool.

An aim of the present invention is to provide a machine tool which is more suited for in-situ machining and for working in confined spaces and/or on relatively large workpieces.

Accordingly, the present invention provides a machine tool as defined in claim 1.

A machine tool in accordance with the present invention differs from previous hexapod machine tools in that it does not have a fixed base platform to which the extensible legs are attached. Instead the legs are individually attached to the surface of the workpiece and the workpiece itself serves as the fixed base. The elimination of the fixed base makes the machine tool more compact and flexible. It also offers the advantage that it can be used on a range of workpiece geometries which do not have to be flat whilst offering maximum access to the working area. The independent attachment of the legs means that they can be attached in a range of configurations to optimise the working envelope of the machine and or avoid any obstructions on or around the workpiece. This results in a highly versatile in-situ machine tool which can be more or less attached to any workpiece geometry regardless of curves, angles or obstructions around the feature to be machined.

Typically, the legs extend from respective spaced positions around the perimeter of the platform. The respective positions on the workpiece may be correspondingly spaced. In use, when a tool is held by the tool holder, the workpiece positions at which the legs are attached typically surround the workpiece location on which the tool operates.

The attachment feet, being removably attachable to the workpiece, allow the machine tool to be located on and to machine relatively large workpieces. That is, the workpiece can form both a stable base for the machine tool and the object on which the machine tool operates. Further, by avoiding the need for a dedicated base for the machine tool, the tool can be used in confined working environments.

Preferably, the machine tool has four or more legs. For example, the tool may have six legs, which can enable a hexapod architecture. As each leg is actuatable and extends from a respective position on the platform to, in use, a respective position on the workpiece, parallel kinematic control of the tool holder may also be enabled.

One or more of the legs may have telescopically linked sections which allow alteration of their inter-joint distances. Alternatively or additionally, one or more of the legs may have hinged sections which allow alteration of their inter-joint distances.

Preferably, the attachment feet comprise suction cups for removably attaching the legs to the workpiece. Alternatively or additionally, the attachment feet may comprise other attachment means, such as adhesive surfaces and/or magnets.

Two or more of the legs may be grouped together into a shared attachment foot. A number of shared attachment feet are used rather than a single base platform.

Preferably, the attachment feet comprise contact sensors to monitor contact between the attachment feet and the workpiece. The contact sensors can provide assurance that the attachment feet have not worked loose during operation of the machine tool. Further, when the attachment feet comprise suction cups, variation in the forces on the machine tool can require changes to the suction vacuum if the machine tool is to be maintained correctly in position. Monitoring the contact between the attachment feet and the workpiece allows the appropriate suction pressure to be supplied.

The first joint systems may be adapted to allow the legs to rotate relative to the platform in all angular directions. Likewise, the second joint systems may be adapted to allow the legs to rotate relative to the workpiece in all angular directions. For example, the first and/or second joint systems can comprise any one or combination of universal joints, ball and socket joints, hinge joints, swivel joints etc.

The joint may include a releasable locking mechanism which enables the legs to be locked into a pre-determined starting position. Once in position the locking mechanism is released to enable the machine to operate normally. The locking mechanism may be actuated by springs, hydraulics, pneumatics, or electrical drives.

Preferably, the platform comprises a stator element from which the legs extend, and a movable stage to which the tool holder is attached for moving the tool holder relative to the stator element. In this way, the platform can provide further degrees of freedom or additional flexibility of movement of the tool holder relative to the workpiece. For example, the stage may be movable relative to the stator element in two orthogonal directions. One option for achieving such movement is to provide a stage comprising a rotor element which rotates relative to the stator element, and a linear slide rotated by the rotor element to which the tool holder is attached. Another option is to provide a stage comprising a first rotor element which rotates relative to the stator element, and a second rotor element which rotates eccentrically relative to the first rotor and to which the tool holder is eccentrically attached. A further option is to provide a stage comprising a first linear slide, and a (preferably orthogonal) second linear slide mounted to the first linear slide to which the tool holder is attached.

The machine tool may further have a controller for controlling and coordinating the actuation of the legs.

The machine tool may further have one or more sensors for determining the position and orientation of the tool holder relative to the workpiece.

The machine tool may further have one or more imaging systems for imaging the operation of the machine tool.

The machine tool may further have one or more coordinate measuring machine systems for measuring the machined surfaces produced by the machine tool.

Another aspect of the invention provides a machine tool according to the first aspect attached to and in combination with a workpiece.

Another aspect of the invention provides the use of the machine tool according to the first aspect for machining a workpiece.

Embodiments of the invention will now be described by way of example with reference to the accompanying drawings in which:
Figure 1 shows a compact machine tool based on a parallel kinematic hexapod architecture;
Figure 2 shows a further compact machine tool; and
Figure 3 shows the machine tool of Figure 2 in use on a workpiece.
Figure 4 shows a compact machine tool having shared attachment feet.
Figure 5 shows a releasable locking mechanism for use in a compact machine tool in accordance with the present invention.

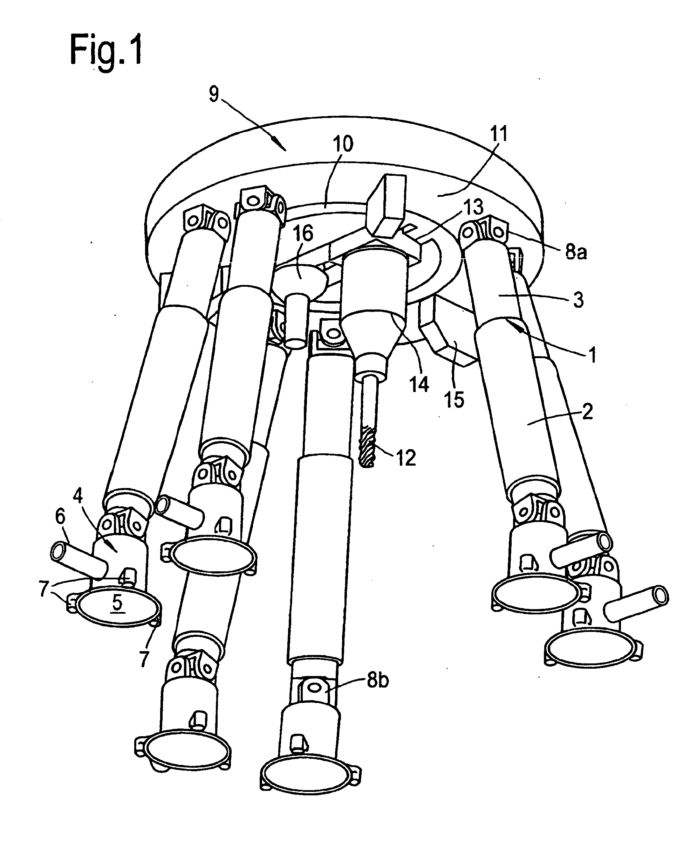

Figure 1 shows a compact machine tool based on a parallel kinematic hexapod architecture for orbital machining.

The machine tool has a platform 9 on which a tool holding spindle 14 is mounted. The tool also has a positioning system comprising six telescopic legs 1, each leg comprising upper 3 and lower 2 telescopically linked sections. Each leg 1 extends at one end from a respective position on the platform 9 and at the other end has an attachment foot 4 which, in use, removably attaches to a respective position on workpiece.

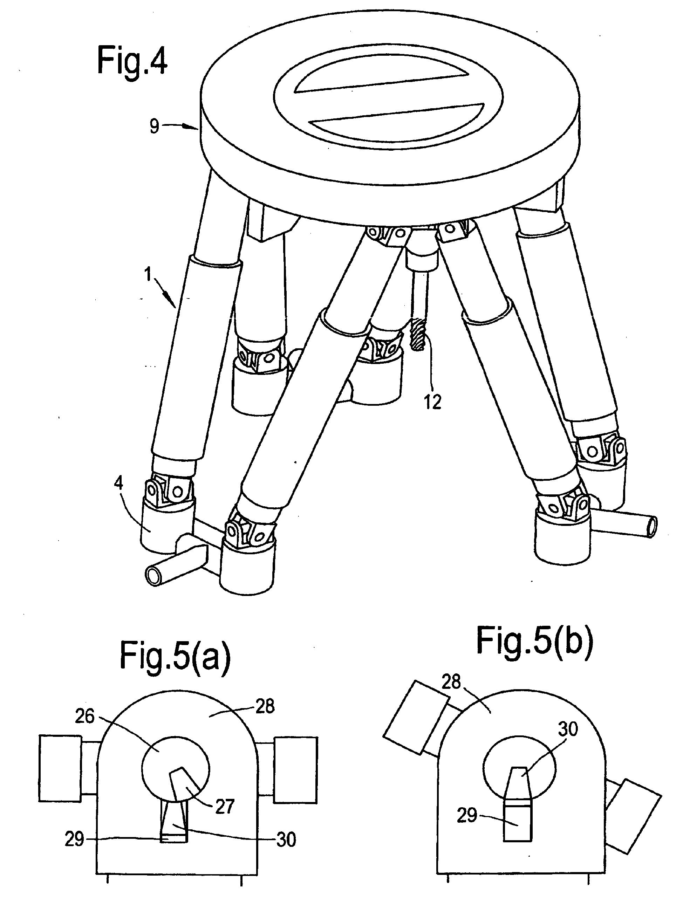

Each leg 1 may have an individual attachment foot 4, as shown in figures 1-3, or the legs 1 may be grouped together into a shared foot for attachment to the workpiece. In the embodiment shown in figure 4 two of the legs 1 are grouped into a shared foot 4. Grouping the legs 1 together into a shared foot 4 simplifies the task of determining the locations of all of the joints in the machine, which is required for effective machine control.

Attachment of the feet 4 to the workpiece is achieved by means of suction cups 5 at the underside of each foot 4, although other attachment means such as adhesives or magnets could be used. Vacuum hoses 6 connect the cups to a remote vacuum source (not illustrated) to provide the clamping force. Three spacing pins 7 are disposed around the suction cup 5 and make contact with the workpiece to ensure a constant distance and angle between the foot 4 and the workpiece and to counter any fluctuations in the clamping force or other forces acting on the structure. The pins 7 can be fitted with contact sensors at their ends to ensure they remain in firm contact with the workpiece at all times during the machining process. If adhesive or magnetic attachment means are used in place of the suction cups 5, the pins 7 may not be needed. However, suction cups 5 generally provide greater operational flexibility as they can be used to attach to a wider range of workpiece materials.

The legs 1 are connected to the feet 4 and the platform 9 by upper 8a and lower 8b universal joints, but other joint systems which allow the legs 1 to rotate relative to respectively the platform 9 and the workpiece could also be used. When the telescopic sections 2 and 3 of a leg 1 are actuated to alter the distance between the upper 8a and lower joints 8b of that leg 1, a corresponding alteration is produced in the position and/or orientation of the platform 9 and hence the spindle 14. Coordinated actuation of the telescopic sections 2 and 3 of all the legs 1 provides motion of the spindle 14 relative to the workpiece with six degrees of freedom. A computer controller (not shown) can provide the actuation commands to each leg 1.

The suction cups 5 make it possible to fasten the machine tool directly to workpieces having a range of different geometries. When the feet 4 are fastened into place, the workpiece effectively acts as the base for the machine tool.

The platform 9 comprises an outer annular stator element 11 to which the upper ends of the legs 1 are attached, the attachment positions of the legs 1 being spaced around the ring. A annular rotor element 10 is mounted inside the stator element 11. The stator element 11 and rotor element 10 form parts of a frameless permanent magnet motor which, when energised, causes the rotor element 10 to rotate within the stator element 11, although other forms of motor suitable for rotating the rotor element 10 are known to the skilled person. Conveniently, the permanent magnets of the motor can be built into the radially inner surface of the stator element 11.

A bridge across the rotor element 10 carries a linear slide 13 on which the spindle 14 is mounted. The slide 13 extends radially from the centre to the periphery of the rotor element 10. The combination of the rotor element 10 and the linear slide 13 allow the spindle 14 to take any position within the area of the rotor element 10, and enables orbital machining with an operating circle of variable diameter. A milling tool 12 is shown attached to spindle 14, but other tools can be attached and other machining operations performed.

The side of the bridge opposite the linear slide 13 carries a catadioptric omnidirectional video camera 16, or similar device, for online monitoring of the machining operation. A Coordinate Measuring Machine (CMM) system such as a laser interferometer (not shown) can also be mounted on the platform 9 for inspection of the workpiece before and after machining.

A set of sensors, such as laser displacement sensors 15, can be mounted on the platform 9 in order to determine its location and orientation in relation to the workpiece and to generate a datum for the machine tool.

Services such as compressed air, electrical power, and data transmission may be achieved through connections (not shown) located at the upper centre or outer periphery of the platform 9.

Advantageously, the machine tool is easily transportable and is capable of being temporarily fastened to relatively large workpieces and operating in confined spaces to perform in-situ maintenance and re-engineering operations. The machine tool may be used, for example, for submarine maintenance. However, the machine tool is highly versatile, and may be used in a variety of applications.

The ability to move the tool 12 attached to spindle 14 in an orbital manner allows operations such as thread repair on holes of differing diameters, profile milling and other processes. Orbital machining facilitates the use of relatively small diameter tools which can work holes having a wide range of different diameters. The machine tool is capable of sensing and referencing its working environment in order to create a datum and origin based on the geometry of the workpiece to which it is fastened. The machine tool is also able to fasten to a range of surface geometries, without the need for intermediate mounting structures.

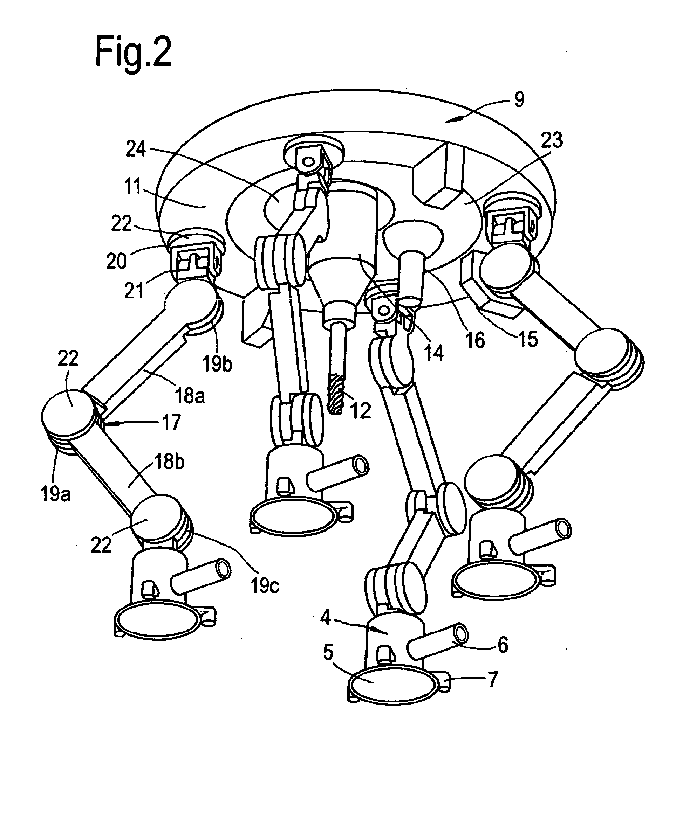

Figure 2 shows a further compact machine tool which differs from the machine tool shown in Figure 1 in two main respects. Firstly, the machine tool is based on a parallel kinematic architecture with four circumferentially spaced hinged legs 17, rather than six telescopic legs 1. Secondly, an eccentric system rather than a linear slide 13 is used to manipulate the tool holding spindle 14. Features of the machine tool of Figure 2 which are the same or similar to those of the machine tool of Figure 1 have the same reference numbers in both figures.

In the machine tool of Figure 2 each hinged leg 17 has upper 18a and lower 18b sections joined by a hinge joint 19a. The upper end of upper section 18a has a further hinge joint 19b, and the lower end of lower section 18b has a further hinge joint 19c which connects to foot 4. Connecting the platform 9 and the hinge joint 19b are first 20 and second 21 swivel joints, the two swivel joints being at 90° to each other.

Each leg 17 is driven by three rotary actuators 22: the first at the first swivel joint 20, the second at the hinge joint 19a, and the third at the hinge joint 19c. In principle any two of the three hinge joints 19a-c can be driven by the second and third rotary actuators, but driving the bottom 19c and middle 19a joints appears to give the best results in simulations.

Like the six telescopic legs 1 of the machine tool of Figure 1, the arrangement of legs 17, hinge joints 19a-c and swivel joints 20 of the machine tool of Figure 2 allows the platform 9 to be moved with six degrees of freedom. However, by eliminating the telescopic sections so that only rotational joints and actuators are employed, greater machine tool stiffness can be achieved, as well as lower production and maintenance costs of actuators and bearings.

Turning to the system for manipulating the tool holding spindle 14, the outer annular stator element 11 of the platform 9 is retained and supports the laser displacement sensors 15. However, in place of the combination of the annular rotor element 10 and the linear slide 13, a combination of two nested rotatable discs is mounted inside the stator element 11. The outer rotable disc 23 is driven in the same way as the annular rotor element 10. The disc 23 contains an offset eccentric hole in which is nested the inner rotatable disc 24. The discs 23, 24 form parts of another frameless permanent magnet motor which, when energised, causes the inner disc 24 to rotate within the outer disc 23. Conveniently, the permanent magnets of this motor can be built into the radially inner surface of the eccentric hole. The spindle 14 is itself eccentrically mounted to the inner disc 24. The catadioptric omnidirectional video camera 16, or similar, is mounted on the inner disc 24 adjacent to the eccentric hole.

Coordinated rotation of discs 23, 24 allows the spindle 14 to take any position within the area of the rotor element 10, and again enables orbital machining with an operating circle of variable diameter.

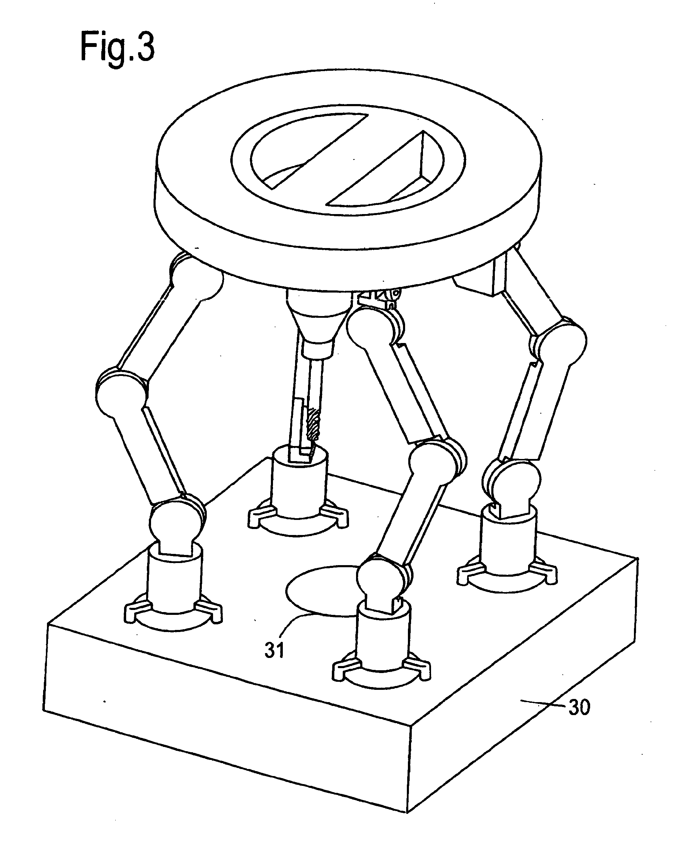

Figure 3 shows a view of the compact machine tool of Figure 2 in position on a workpiece 30, which has a hole 31 for orbital milling by the machine tool.

The joints used at either end of the legs 1 may include a releasable locking mechanism. An example of a lockable universal joint is shown in figure 5.

Referring to figure 5a the inner section of the joint 26 has a hole 27 at a specific location around its circumference. The outer section 28 of the joint also has a hole 29 in its inner circumference. The two holes 27, 29 are aligned when the joint is at the desired angle, figure 5b. A locking pin 30 extends through the holes 27, 29 when they are aligned to lock the joint in position. The locking pin 30 may be actuated by various means, including but not limited to springs, hydraulics, pneumatics or electrical drives.

The use of a lockable joint in the compact machine tool enables the legs 1 to be locked in a pre-determined starting position. This enables the accurate location of all the joints and provides a datum for the machine tool. Once the feet 4 have been securely fastened to the workpiece, the locking mechanism is released to enable the machine to operate normally.

## Claims

1. A machine tool having a tool holder (14) mounted to a platform (9) and a plurality of legs (1, 17) extending from respective positions on the platform (9) to connect the platform (9) to respective positions on a workpiece, each leg (1,17) having an attachment foot (4) at its workpiece end for removably attaching the leg (1,17) to the workpiece, each leg (1, 17) having a first joint system (8a, 20, 21) at its platform end and a second joint system (8b,19c) at its workpiece end, the first and second joint systems allowing each leg (1, 17) to rotate relative to respectively the platform (9) and the workpiece, wherein coordinated actuation of all of the legs (1,17) is provided to alter the inter-joint distance between the first and second joint systems, such that when the attachment feet (4) are fastened in place on the workpiece each leg is actuated to alter the inter-joint distance and by coordinating alterations in the inter-joint distances of the legs (1,17) the position and orientation of the tool holder (14) relative to the workpiece is controllable and allows the tool holder (14) to be moved with six degrees of freedom relative to the workpiece.

2. A machine tool according to claim 1 **characterised in that** it has four or more legs (1,17).

3. A machine tool according to claim 1 or claim 2 **characterised in that** at least two of the legs (1,17) are grouped into a shared attachment foot (4).

4. A machine tool according to any of claims 1-3 **characterised in that** the attachment feet (4) include suction cups (5).

5. A machine tool according to any of claims 1-4 **characterised in that** the attachment feet (4) include contact sensors to monitor contact between the attachment feet (4) and the workpiece.

6. A machine tool according to any of claims 1-5 in which the joints include a locking mechanism which is used to lock the legs in a predetermined position whilst locating the machine tool on the workpiece.

7. A machine tool according to any of claims 1-6 **characterised in that** the platform (9) comprises a stator element (11) from which the legs (1,17) extend, and a movable stage (10,13) to which the tool holder (14) is attached for moving the tool holder (14) relative to the stator element (11).

8. A machine tool according to claim 7 **characterised in that** the stage (10,13) is movable relative to the stator element (11) in two orthogonal directions.

9. A machine tool according to any one of the previous claims **characterised in that** a controller is provided for controlling and coordinating the actuation of the legs (1,17).

10. A machine tool according to any one of the previous claims **characterised in that** one or more sensors (15) are provided for determining the position and orientation of the tool holder (14) relative to the workpiece.

11. A machine tool according to any one of the previous claims **characterised in that** one or more imaging systems (16) are used for imaging the operation of the machine tool.

12. A machine tool according to any one of the previous claims **characterised in that** it includes one or more coordinate measuring machine systems for measuring the machined surfaces produced by the machine tool.

13. A machine tool according to any one of the previous claims attached to and in combination with a workpiece.

14. Use of the machine tool according to any one of claims 1 to 12 for machining a workpiece.

## Patentansprüche

1. Werkzeugmaschine mit einem Werkzeughalter (14), der an einer Plattform (9) angebracht ist und mit einer Mehrzahl von Beinen (1, 17), die sich von entsprechenden Positionen an der Plattform (9) erstrecken, um die Plattform (9) mit entsprechenden Positionen an einem Werkstück zu verbinden, wobei jedes Bein (1, 17) einen Befestigungsfuß (4) an dessen erkstückende zur entfernbaren Befestigung des Beins (1, 17) an dem Werkstück aufweist, wobei jedes Bein (1, 17) ein erstes Gelenksystem (8a, 20, 21) an dessen Plattformende aufweist und ein zweites Gelenksystem (8b, 19c) an dessen Werkstückende, wobei die ersten und zweiten Gelenksysteme es ermöglichen, dass sich jedes Bein (1, 17) entsprechend im Verhältnis zu der Plattform (9) und dem Werkstück dreht, wobei die koordinierte Betätigung aller Beine (1, 17) vorgesehen wird, um den Gelenkzwischenabstand zwischen den ersten und zweiten Gelenksystemen anzupassen, so dass, wenn die Befestigungsfüße (4) an der Verwendungsposition an dem Werkstück befestigt werden, jedes Bein betätigt wird, um den Gelenkzwischenabstand anzupassen, und wobei durch die Koordination der Anpassungen der Gelenkzwischenabstände der Beine (1, 17) die Position und die Ausrichtung des Werkzeughalters (14) im Verhältnis zu dem Werkstück kontrolliert werden kann, und wobei es ermöglicht wird, dass der Werkzeughalter (14) mit sechs Grad Bewegungsfreiheit im Verhältnis zu dem Werkstück bewegt wird.

2. Werkzeugmaschine nach Anspruch 1, **dadurch gekennzeichnet, dass** diese vier oder mehr Beine (1, 17) aufweist.

3. Werkzeugmaschine nach Anspruch 1 oder 2, **dadurch gekennzeichnet, dass** mindestens zwei der Beine (1, 17) in einem gemeinsamen Befestigungsfuß (4) zusammengefasst sind.

4. Werkzeugmaschine nach einem der Ansprüche 1 bis 3, **dadurch gekennzeichnet, dass** die Befestigungsfüße (4) Saugnäpfe aufweisen.

5. Werkzeugmaschine nach einem der Ansprüche 1 bis 4, **dadurch gekennzeichnet, dass** die Befestigungsfüße (4) Kontaktsensoren zur Überwachung des Kontakts zwischen den Befestigungsfüßen (4) und dem Werkstück aufweisen.

6. erkzeugmaschine nach einem der Ansprüche 1 bis 5, **dadurch gekennzeichnet, dass** die Gelenke einen Verriegelungsmechanismus aufweisen, der zur Verriegelung der Beine an einer vorbestimmten Position verwendet wird, während die Werkzeugmaschine an dem Werkstück positioniert wird.

7. Werkzeugmaschine nach einem der Ansprüche 1 bis 6, **dadurch gekennzeichnet, dass** die Plattform (9) ein Statorelement (11) umfasst, von dem sich die Beine (1, 17) erstrecken, und mit eine beweglichen Bühne (10, 13), an welcher der Werkzeughalter (14) angebracht ist, um den Werkzeughalter (14) im Verhältnis zu dem Statorelement (11) zu bewegen.

8. Werkzeugmaschine nach Anspruch 7, **dadurch gekennzeichnet, dass** die Bühne (10, 13) im Verhältnis zu dem Statorelement (11) in zwei orthogonale Richtungen beweglich ist.

9. Werkzeugmaschine nach einem der vorstehenden Ansprüche, **dadurch gekennzeichnet, dass** eine Steuereinrichtung vorgesehen ist zum Steuern und Koordinieren der Betätigung der Beine (1, 17).

10. Werkzeugmaschine nach einem der vorstehenden Ansprüche, **dadurch gekennzeichnet, dass** ein oder mehrere Sensoren (15) vorgesehen sind, um die Position und Ausrichtung des Werkzeughalters (14) im Verhältnis zu dem Werkstück zu bestimmen.

11. Werkzeugmaschine nach einem der vorstehenden Ansprüche, **dadurch gekennzeichnet, dass** ein oder mehrere bilddarstellende Systeme (16) zur bildlichen Darstellung des Betriebs der Werkzeugmaschine verwendet werden.

12. Werkzeugmaschine nach einem der vorstehenden Ansprüche, **dadurch gekennzeichnet, dass** diese ein oder mehrere Koordinatenmessmaschinensysteme zum Messen der durch die Werkzeugmaschine erzeugten bearbeiteten Oberflächen aufweist.

13. Werkzeugmaschine nach einem der vorstehenden Ansprüche, die an einem Werkstück angebracht und in Kombination mit diesem vorgesehen ist.

14. Werkzeugmaschine nach einem der Ansprüche 1 bis 12 zur Bearbeitung eines Werkstücks.

## Revendications

1. Machine-outil ayant un porte-outil (14) monté sur une plate-forme (9) et une pluralité de jambes (1, 17) s'étendant à partir de positions respectives sur la plate-forme (9) pour relier la plate-forme (9) à des positions respectives sur une pièce à usiner, chaque jambe (1, 17) ayant un pied de fixation (4) à son extrémité pièce à usiner pour fixer de façon amovible la jambe (1, 17) à la pièce à usiner, chaque jambe (1, 17) ayant un premier système d'articulation (8a, 20, 21) à son extrémité de plate-forme et un second système d'articulation (8b, 19c) à son extrémité pièce à usiner, les premier et second systèmes d'articulation permettant à chaque jambe (1, 17) de tourner par rapport à respectivement la plate-forme (9) et la pièce à usiner, dans lequel l'actionnement coordonné de toutes les jambes (1, 17) permet de modifier la distance entre articulations entre les premier et second systèmes d'articulation, de sorte que lorsque les pieds de fixation (4) sont fixés en place sur la pièce à usiner chaque jambe est actionnée pour modifier la distance entre articulations et en coordonnant les modifications des distances entre articulations des jambes (1, 17), la position et l'orientation du porte-outil (14) par rapport à la pièce à usiner peuvent être commandées et permettent au porte-outil (14) d'être déplacé avec six degrés de liberté par rapport à la pièce à usiner.

2. Machine-outil selon la revendication 1, **caractérisée en ce qu'**elle a au moins quatre jambes (1, 17).

3. Machine-outil selon la revendication 1 ou 2, **caractérisée en ce qu'**au moins deux des jambes (1, 17) sont regroupées dans un pied de fixation commun (4).

4. Machine-outil selon l'une quelconque des revendications 1 à 3, **caractérisée en ce que** les pieds de fixation (4) comprennent des ventouses (5).

5. Machine-outil selon l'une quelconque des revendications 1 à 4, **caractérisée en ce que** les pieds de fixation (4) comprennent des capteurs de contact pour surveiller le contact entre les pieds de fixation (4) et la pièce à usiner.

6. Machine-outil selon l'une quelconque des revendications 1 à 5, dans laquelle les articulations comprennent un mécanisme de verrouillage qui sert à verrouiller les jambes dans une position prédéterminée tout en plaçant la machine-outil sur la pièce à usiner.

7. Machine-outil selon l'une quelconque des revendications 1 à 6, **caractérisée en ce que** la plate-forme (9) comprend un élément stator (11) à partir duquel les jambes (1, 17) s'étendent, et une platine mobile (10, 13) à laquelle le porte-outil (14) est fixé pour déplacer le porte-outil (14) par rapport à l'élément stator (11).

8. Machine-outil selon la revendication 7, **caractérisée en ce que** la platine (10, 13) est mobile par rapport à l'élément stator (11) dans deux directions orthogonales.

9. Machine-outil selon l'une quelconque des revendications précédentes, **caractérisée en ce qu'**un dispositif de commande permet de commander et de coordonner l'actionnement des jambes (1, 17).

10. Machine-outil selon l'une quelconque des revendications précédentes, **caractérisée en ce qu'**un ou plusieurs capteurs (15) permettent de déterminer la position et l'orientation du porte-outil (14) par rapport à la pièce à usiner.

11. Machine-outil selon l'une quelconque des revendications précédentes, **caractérisée en ce qu'**un ou plusieurs systèmes d'imagerie (16) permettent d'imager le fonctionnement de la machine-outil.

12. Machine-outil selon l'une quelconque des revendications précédentes, **caractérisée en ce qu'**elle comprend un ou plusieurs systèmes mécaniques de mesure de coordonnées pour mesurer les surfaces usinées produites par la machine-outil.

13. Machine-outil selon l'une quelconque des revendications précédentes, fixée à et en association avec une pièce à usiner.

14. Utilisation de la machine-outil selon l'une quelconque des revendications 1 à 12 pour usiner une pièce à usiner.
